# EUROPÄISCHE PATENTSCHRIFT

(11) **EP 4 111 918 B1**
(45) Veröffentlichungstag und Bekanntmachung des Hinweises auf die Patenterteilung: **20.09.2023**
(21) Anmeldenummer: 21181971.9
(22) Anmeldetag: 28.06.2021
(51) Int. Cl.: A47J 43/07

(54) **VORRICHTUNG ZUM POSITIONIEREN EINER KÜCHENMASCHINE, BASISGERÄT MIT DER VORRICHTUNG UND VERFAHREN ZUM VERWENDEN DES BASISGERÄTES**
DEVICE FOR POSITIONING A KITCHEN APPLIANCE, BASE APPARATUS COMPRISING THE DEVICE AND METHOD OF USING THE BASE APPARATUS
DISPOSITIF DE POSITIONNEMENT D'UNE MACHINE DE CUISINE, APPAREIL DE BASE POURVU DU DISPOSITIF ET PROCÉDÉ D'UTILISATION DE L'APPAREIL DE BASE

(43) Veröffentlichungstag der Anmeldung: 04.01.2023
(73) Patentinhaber: Vorwerk & Co. Interholding GmbH, 42275 Wuppertal (DE)
(72) Erfinder: LANG, Torsten, 42657 Solingen (DE); HAUNSCHILD, Felix, 45239 Essen (DE); RUSCH, Lennart, 45307 Essen (DE)
(74) Vertreter: Bals & Vogel Patentanwälte PartGmbB

(56) Entgegenhaltungen:
- DE-U1-202019 102 012
- US-A1- 2005 058 018
- US-A1- 2019 313 855

## Beschreibung

Die vorliegende Erfindung betrifft eine Vorrichtung zum Bewegen einer Küchenmaschine auf einer Arbeitsfläche, um die Küchenmaschine in einer gewünschten Position auf der Arbeitsfläche zu platzieren. Die Erfindung betrifft ferner ein Basisgerät für eine Küchenmaschine mit einer solchen Vorrichtung sowie ein Verfahren zum Verwenden eines solchen Basisgerätes.

Im Stand der Technik bekannte Küchenmaschinen sind in der Regel durch ihr Gewicht relativ schwer. Befindet sich eine solche Küchenmaschine auf einer Arbeitsfläche, kann es für manche Personen durchaus eine Herausforderung darstellen, die Küchenmaschine sicher von einer Position in eine gewünschte andere Position zu bewegen. Insbesondere kleine und/oder präzise Bewegungsvorgänge lassen sich nur schwer oder mit notdürftigen Hilfsmitteln realisieren. So stellen manche Personen die Küchenmaschine beispielsweise auf Tücher und/oder Decken, um die Küchenmaschine durch Zug am Tuch oder der Decke leichter verschieben zu können. Die verwendeten Tücher oder Decken sind jedoch schmutzanfällig und entsprechend unhygienisch. Eine weitere Lösung zum vereinfachten Umpositionieren schwerer Küchenmaschinen ist die Positionierung der Küchenmaschine auf einem handelsüblichen Rollbrett, das leichtläufig auf der Arbeitsfläche bewegt werden kann. Rollbretter verhindern allerdings einen sicheren Stand der Küchenmaschine. Dieser kann nur mit einer zusätzlichen Bremsvorrichtung gewährleistet werden. Weiterhin ist es bekannt, dass Gleitvorrichtungen verwendet werden, um die Küchenmaschine auf der Arbeitsfläche ohne Anheben der Küchenmaschine in die gewünschte Position zu schieben. Auch hier ist die Standsicherheit der Küchenmaschine reduziert. Außerdem können bekannte Gleiter Rückstände, beispielsweise in Form von Striemen, auf der Arbeitsfläche hinterlassen. Die beschriebenen Hilfsmittel können außerdem etwaige Waagefunktionen der Küchenmaschine negativ beeinträchtigen. Darüber hinaus ist die Standfestigkeit während eines Betriebs der Küchenmaschine grundsätzlich wichtig, um Verletzungen beim Nutzer der Küchenmaschine und/oder Schäden an der Küchenmaschine zu verhindern. Bei der Konstruktion konventioneller Küchenmaschinen wird deshalb grundsätzlich hoher Wert auf einen möglichst stabilen Stand der Küchenmaschine gelegt, der ein Verschieben und/oder Verrutschen der Küchenmaschine während des Betriebs der Küchenmaschine möglichst verhindern soll.

Gattungsgemäße Küchenmaschinen werden in der US 2019/313855 A1 und in der DE 20 2019 102012 U1 beschrieben.

Aufgabe der vorliegenden Erfindung ist es, der voranstehend beschriebenen Problematik zumindest teilweise Rechnung zu tragen. Insbesondere ist es Aufgabe der vorliegenden Erfindung, eine Vorrichtung sowie ein Verfahren zum einfachen Verschieben einer gattungsgemäßen Küchenmaschine unter Einhaltung einer trotzdem hohen Betriebssicherheit der Küchenmaschine zu schaffen.

Die voranstehende Aufgabe wird durch die Patentansprüche gelöst. Insbesondere wird die voranstehende Aufgabe durch das Basisgerät gemäß Anspruch 1 sowie das Verfahren gemäß Anspruch 13 gelöst. Weitere Vorteile der Erfindung ergeben sich aus den Unteransprüchen, der Beschreibung und den Figuren. Dabei gelten Merkmale, die im Zusammenhang mit dem Basisgerät beschrieben sind, selbstverständlich auch im Zusammenhang mit dem erfindungsgemäßen Verfahren und jeweils umgekehrt, sodass bezüglich der Offenbarung zu den einzelnen Erfindungsaspekten stets wechselseitig Bezug genommen wird und/oder werden kann.

Gemäß einem ersten Aspekt der vorliegenden Erfindung wird ein Basisgerät für eine Küchenmaschine mit einer Vorrichtung zum verschiebbaren Positionieren der Küchenmaschine auf einer Arbeitsfläche zur Verfügung gestellt. Das Basisgerät weist ein Gehäuse mit einer Behälteraufnahme zum Aufnehmen eines Lebensmittelbehälters und einen Bodenbereich, der wenigstens teilweise unterhalb der Behälteraufnahme ausgestaltet ist, auf. Die Vorrichtung ist wenigstens teilweise im Bodenbereich ausgestaltet und weist ein Verschiebemittel zum Verschieben der Küchenmaschine auf der Arbeitsfläche auf, wobei das Verschiebemittel für den Einbau in einen Bodenbereich eines Basisgerätes der Küchenmaschine konfiguriert und ausgestaltet ist. Die Vorrichtung umfasst ferner ein Verstellmittel zum Verstellen des Verschiebemittels, insbesondere der Größe und/oder der Position des Verschiebemittels, zwischen
- einem deaktivierten Zustand des Verschiebemittels zum Positionieren des Verschiebemittels beabstandet von der Arbeitsfläche, insbesondere in eine Position in und/oder an der Küchenmaschine, und
- einem aktivierten Zustand des Verschiebemittels zum Positionieren von wenigstens einem Teil des Verschiebemittels auf der Arbeitsfläche zum Verschieben der Küchenmaschine.

Zum Erreichen einer möglichst hohen Betriebssicherheit des Basisgerätes weist das Basisgerät ein Kontrollmittel zum (automatischen) Erkennen eines Betriebszustandes des Basisgerätes und zum Erlauben eines Verstellens des Verschiebemittels vom deaktivierten Zustand in den aktivierten Zustand anhand des erkannten Betriebszustandes auf. Das heißt, ein Verschieben des Gerätes unter Verwendung eines aktivierten Verschiebemittels ist nur in einem sicheren Betriebszustand des Basisgerätes möglich. So kann ein Verstellen des Verschiebemittels in den aktivierten Zustand beispielsweise verhindert und/oder verboten werden, wenn durch das Basisgerät Lebensmittel zubereitet werden, durch einen Temperatursensor des Basisgerätes eine vordefinierte Temperatur im und/oder am Basisgerät (durch das Kontrollmittel) erkannt wird, oder das Basisgerät für andere vordefinierte Tätigkeiten in Betrieb ist. Erlaubt werden kann ein Verstellen des Verschiebemittels in den aktivierten Zustand beispielsweise dann, wenn das Basisgerät nicht in Betrieb ist und/oder sich beispielsweise in einem Stand-By-Zustand befindet. Das Erlauben des Verstellens kann dahingehend verstanden werden, dass das Kontrollmittel das Verstellen des Verschiebemittels in den aktivierten Zustand erlaubt und/oder durchführt, wenn sich das Basisgerät in einem vordefinierten Betriebszustand befindet und/oder das Verstellen des Verschiebemittels in den aktivierten Zustand verhindert und/oder verbietet, wenn sich das Verschiebemittel nicht im vordefinierten Betriebszustand befindet und/oder sich in einem anderen vordefinierten Betriebszustand befindet.

Das Basisgerät kann eine Motoreinheit zum Betreiben der Küchenmaschine und/oder zum Antreiben der Vorrichtung sowie eine Steuereinheit zum Steuern und/oder Kontrollieren der Küchenmaschine und/oder der Vorrichtung aufweisen. Die Steuereinheit kann als das vorliegend beschriebene Kontrollmittel verstanden werden. Zudem kann das Basisgerät eine Heizeinheit zum Heizen von Lebensmitteln in der Küchenmaschine und/oder eines im und/oder am Basisgerät positionierten Lebensmittelbehälters aufweisen. Die erfindungsgemäße Vorrichtung ist zumindest im deaktivierten Zustand des Verschiebemittels vollständig oder im Wesentlichen vollständig im Bodenbereich des Basisgerätes integriert und/oder positioniert. Im aktivierten Zustand des Verschiebemittels ragt vorzugsweise nur ein Teil des Verschiebemittels, insbesondere in Form von wenigstens einer Rolle und/oder eines Gleitmittels, über eine Unterseite bzw. Außenfläche des Bodenbereichs hinaus. Das mit einer erfindungsgemäßen Vorrichtung ausgestattete Basisgerät ist deshalb zumindest im deaktivierten Zustand des Verschiebemittels nicht von einem Basisgerät ohne der erfindungsgemäßen Vorrichtung zu unterscheiden. Durch die zumindest annähernd vollständige Integration der Vorrichtung in den Bodenbereich ist die Vorrichtung effektiv gegen Umwelteinflüsse geschützt. Unter einer Integration der Vorrichtung in den Bodenbereich kann entsprechend verstanden werden, dass die Vorrichtung innerhalb des Bodenbereichs und/oder in einem bodenseitigen Bereich innerhalb des Gehäuses installiert ist. Das Verschiebemittel ist, zum Beabstanden des Gehäuses von der Arbeitsfläche, in den aktivierten Zustand verstellbar. Das heißt, das Basisgerät ist dahingehend konfiguriert, dass das Gehäuse einschließlich möglicher Standfüße von der Arbeitsfläche beabstandet wird, wenn das Verschiebemittel vom deaktivierten Zustand in den aktivierten Zustand verstellt wird. Genauer gesagt wird das Gehäuse durch Kontaktieren des Verschiebemittels an der Arbeitsfläche von der Arbeitsfläche weg nach oben gehoben. Zusätzlich kann zumindest ein (vorzugsweise mehrere) Umgebungssensor vorgesehen sein, der insbesondere mit dem Kontrollmittel datentechnisch verbunden ist, wodurch die Umgebung des Basisgeräts auf mögliche Kollisionen überwachbar ist.

Sobald das Verstellmittel das Verschiebemittel in den aktivierten Zustand verstellt hat, lässt sich die Küchenmaschine und/oder die Basiseinheit der Küchenmaschine auf einfache Weise, also mühelos bzw. nahezu kraftfrei auf der Arbeitsfläche verschieben. Befindet sich das Verschiebemittel hingegen im deaktivierten Zustand, kann ein fester Stand der Basiseinheit und/oder der Küchenmaschine für den laufenden Betrieb (der Küchenmaschine) vorzugsweise ohne Beeinträchtigung einer etwaigen Waagefunktion gewährleistet werden, da das Verschiebemittel in einem Abstand (also beabstandet und kontaktfrei) zur Arbeitsfläche positioniert ist. Das heißt, unter Verwendung des erfindungsgemäßen Basisgerätes können sowohl ein einfaches Bewegen der Küchenmaschine als auch ein sicherer Stand der Küchenmaschine, und zwar ohne Gerätefunktionen im Betrieb zu beeinflussen, ermöglicht werden. Dadurch kann einerseits der Komfort der Küchenmaschine beim Verschieben deutlich verbessert werden und andererseits kann eine hohe Sicherheit im Betrieb der Küchenmaschine erzielt werden.

Bislang bekannte Verschiebemittel für Küchenmaschinen befinden sich, sobald sie an und/oder in der Küchenmaschine installiert sind, stets in einem aktivierten Zustand. Ein Deaktivieren eines unter die Küchenmaschine gelegten Küchentuchs oder eines an der Küchenmaschine installierten Rollbrettes ist nicht oder zumindest nicht auf die erfindungsgemäße Weise durch ein einfaches Verstellmittel möglich. Durch die einfache Verstellmöglichkeit zwischen dem aktivierten Zustand und dem deaktivierten Zustand können eine möglicherweise in der Küchenmaschine vorhandene und sensible Waagefunktion bzw. entsprechende Sensoren geschützt werden. Servicefälle und/oder Reparaturarbeiten an der Küchenmaschine können damit zumindest reduziert oder sogar verhindert werden.

Unter der Küchenmaschine kann vorliegend insbesondere ein Koch- und/oder Mix-Gerät verstanden werden. Unter dem Basisgerät kann ein Gerät mit einer Motoreinheit, einer Steuereinheit zum Steuern und/oder Bedienen der Küchenmaschine und/oder einer Heizeinheit verstanden werden. Unter dem Verschieben ist insbesondere ein gleitendes und/oder rollendes, also ein möglichst widerstandsarmes, lineares Verschieben der Küchenmaschine zu verstehen (ohne Maschine anheben zu müssen).

Als Bodenbereich kann der Teil des Basisgerätes verstanden werden, der die Unterseite des Basisgerätes, also die Seite, die bei Verwendung der Küchenmaschine zur Arbeitsfläche gerichtet ist (und üblicherweise als Standfläche dient), verstanden werden. Das Verschiebemittel ist dahingehend konfiguriert und ausgestaltet, dass es in einem im Basisgerät verbauten Zustand in Richtung der Arbeitsfläche (bei einer Aktivierung) aus dem Bodenbereich über die Unterseite des Basisgerätes hinaus bewegt wird oder werden kann. Das heißt, das Verstellmittel kann zum Verstellen der Größe und/oder der Position des Verschiebemittels zwischen einem deaktivierten Zustand des Verschiebemittels zum Positionieren des Verschiebemittels vollständig innerhalb des Bodenbereiches und einem aktivierten Zustand des Verschiebemittels zum Bewegen von wenigstens einem Teil des Verschiebemittels über die Unterseite des Bodenbereichs hinaus konfiguriert und ausgestaltet sein. Das Verstellmittel kann zum rein mechanischen und vorzugsweise zum elektromechanischen Verstellen des Verschiebemittels konfiguriert und ausgestaltet sein.

Zum verschiebbaren Positionieren der Küchenmaschine weist das Verschiebemittel eine Verschiebekontaktfläche zum Kontaktieren der Arbeitsfläche im aktivierten Zustand auf, die eine bessere bzw. höhere Gleitfähigkeit als ein Standmittel der Küchenmaschine aufweist. Unter dem Standmittel kann hierbei ein übliches Standmittel wie beispielsweise ein gummiertes und/oder möglichst rutschfestes Standmittel zum rutschfesten Positionieren der Küchenmaschine und/oder des Basisgerätes jeweils im deaktivierten Zustand betrachtet werden, das also für einen möglichst stabilen Stand der Küchenmaschine auf der Arbeitsfläche konfiguriert ist.

Unter der Arbeitsfläche kann jede Oberfläche verstanden werden, auf welcher gattungsgemäße Küchenmaschinen für gewöhnlich abgestellt werden und/oder abgestellt werden können, also insbesondere die Oberseite einer Küchenplatte und/oder eines Küchentisches. Unter dem Einbau ist insbesondere ein form- und/oder kraftschlüssiger, vorzugsweise lösbarer, Einbau mit Werkzeug und damit insbesondere kein einfaches Positionieren an einer Küchenmaschine und/oder an einem Basisgerät zu verstehen. Das Verstellen der Größe und/oder der Position des Verschiebemittels zwischen dem aktivierten Zustand und dem deaktivierten Zustand ist bevorzugt dahingehend zu verstehen, dass das Verschiebemittel durch das Verstellmittel zwischen zumindest zwei (oder mehreren) unterschiedlichen Positionen und/oder Formzuständen hin und her, insbesondere mit mechanischen und/oder elektromechanischen Hilfsmitteln, verstellt werden kann. Ausführungsformen und/oder Vorteile, die vorliegend mit Bezug auf das Basisgerät beschrieben werden, können auf analoge Weise mit Bezug auf die Küchenmaschine verstanden werden. Dasselbe gilt auf analoge Weise umgekehrt.

Gemäß einer weiteren Ausführungsform der vorliegenden Erfindung ist es möglich, dass das Verschiebemittel wenigstens eine Rolle oder Kugel zum rollenden Verschieben der Küchenmaschine aufweist. Mittels der Rolle oder Kugel kann die Küchenmaschine besonders leichtgängig verschoben werden. Damit ist auf entsprechend einfache Weise eine besonders genaue Positionierung der Küchenmaschine möglich. Die wenigstens eine Rolle kann zylinderförmig oder kugelförmig ausgestaltet sein. Unter der wenigstens einen Rolle kann mithin wenigstens eine Laufrolle verstanden werden. Mittels einer kugelförmigen Rolle kann die Küchenmaschine besonders leicht in sämtliche Richtungen auf der Arbeitsfläche verschoben werden. Zylinderförmige Rollen verteilen das Gewicht der Küchenmaschine besonders gleichmäßig auf der Arbeitsfläche, wodurch unerwünschte Rückstände und/oder Schäden an der Arbeitsfläche verhindert werden können. Gemäß einer bevorzugten Ausführungsform weist das Verschiebemittel drei oder vier Rollen zum rollenden Verschieben der Küchenmaschine auf. Bevorzugt werden 3 Rollen, da somit immer eine spielfreie (wackelfreie) Positionierung der Küchenmaschine auf der Arbeitsplatte gewährleistet ist. In einem im Bodenbereich verbauten Zustand der Vorrichtung befindet sich die wenigstens eine Rolle im deaktivierten Zustand im Bodenbereich beabstandet von der Arbeitsfläche und im aktivierten Zustand auf der Arbeitsfläche. Mit anderen Worten, das Verstellmittel kann zum Verstellen bzw. Ein- und/oder Ausfahren des Verschiebemittels zwischen einem deaktivierten Zustand des Verschiebemittels zum Positionieren der wenigstens einen Rolle beabstandet von der Arbeitsfläche in und/oder an der Küchenmaschine und einem aktivierten Zustand des Verschiebemittels zum Positionieren der wenigstens einen Rolle auf der Arbeitsfläche zum Verschieben der Küchenmaschine konfiguriert und ausgestaltet sein.

Weiterhin ist es möglich, dass das Verschiebemittel bei einer Vorrichtung wenigstens ein Gleitmittel zum gleitenden Verschieben der Küchenmaschine aufweist. Durch das Gleitmittel ist ein besonders schonendes Verschieben der Küchenmaschine auf der Arbeitsfläche möglich. Das Gleitmittel weist mit Bezug auf die Arbeitsplatte einen kleineren Reibungskoeffizienten und/oder einen geringeren Gleitwiderstand (durch das vorhandene Material und die ausgestaltet Kontaktfläche) als ein Standmittel und/oder Standfüße der Küchenmaschine auf. In einem im Bodenbereich verbauten Zustand der Vorrichtung befindet sich das wenigstens eine Gleitmittel im deaktivierten Zustand im Bodenbereich beabstandet von der Arbeitsfläche und im aktivierten Zustand auf der Arbeitsfläche. Mit anderen Worten, das Verstellmittel kann zum Verstellen bzw. Ein- und/oder Ausfahren des Verschiebemittels (wie bei den Rollen als Verschiebmittel) zwischen einem deaktivierten Zustand des Verschiebemittels zum Positionieren des wenigstens einen Gleitmittels beabstandet von der Arbeitsfläche in und/oder an der Küchenmaschine und einem aktivierten Zustand des Verschiebemittels zum Positionieren des wenigstens einen Gleitmittels auf der Arbeitsfläche zum Verschieben der Küchenmaschine konfiguriert und ausgestaltet sein. Das Verschiebemittel kann eine Kombination aus wenigstens einer Rolle und wenigstens einem Gleitmittel aufweisen. So kann das Verschiebemittel beispielsweise eine Rolle und zwei Gleitmittel aufweisen, die analog zur den vorstehend beschriebenen Ausführungsformen konfiguriert sind.

Ferner kann eine Vorrichtung einen Linearantrieb für eine vorzugsweise translatorische Bewegung von wenigstens einem Teil des Verschiebemittels zwischen dem deaktivierten Zustand und dem aktivierten Zustand aufweisen. Unter dem wenigstens einen Teil des Verschiebemittels können insbesondere die wenigstens eine Rolle und/oder das wenigstens eine Gleitmittel verstanden werden. Mittels des Linearantriebs können das Verschiebemittel und/oder der wenigstens eine Teil des Verschiebemittels platzsparend und robust zwischen dem deaktivierten und dem aktivierten Zustand verstellt werden. Bei einer Vorrichtung ist insbesondere das Verstellmittel zum Ansteuern des Linearantriebs und zum entsprechenden Verstellen des Verschiebemittels konfiguriert. Unter dem Linearantrieb oder einem entsprechenden Linearantriebssystem können alle Antriebssysteme verstanden werden, die zu einer (im Wesentlichen) translatorischen Bewegung von wenigstens einem Teil des Verschiebemittels führen. Durch den Linearantrieb kann der wenigstens eine Teil des Verschiebemittels in gerader Linie bewegt und/oder verschoben werden. Zum Verschieben des wenigstens einen Teils des Verschiebemittels kann der Linearantrieb wenigstens ein Kugelgewindegetriebe, einen Gewindestangenantrieb, ein Rollengewindegetriebe, ein Rollengewindegetriebe mit Rollenrückführung, ein Planetenrollengewindegetriebe, einen Hydraulikzylinder, einen Pneumatikzylinder, einen elektromechanischen Linearantrieb, einen Linearmotor mit elektrodynamischem Wirkprinzip und/oder einen Linearaktor mit piezoelektrischem, elektrostatischem, elektromagnetischem, magnetostriktivem oder thermoelektrischem Wirkprinzip aufweisen. Für die platzsparende Realisierung eines möglichst langen Stellweges kann der Linearantrieb eine Reihenschaltung mehrerer Antriebe, also einen teleskopartig verstellbaren Linearantrieb, aufweisen.

Außerdem ist es möglich, dass das Verstellmittel bei einer Vorrichtung zum Verstellen des Verschiebemittels zwischen dem deaktivierten Zustand und dem aktivierten Zustand einen Zahnradmechanismus aufweist. Mittels des Zahnradmechanismus kann das Verschiebemittel mechanisch einfach zwischen dem aktivierten und dem deaktivierten Zustand verschoben werden. Je nach Übersetzung des Zahnradmechanismus lässt sich auch eine geringe Verstellhöhe bzw. eine geringe Verstelllänge des Verschiebemittels zwischen dem aktivierten Zustand und dem deaktivierten Zustand präzise realisieren.

Bei einer vorteilhaften Ausführungsform kann das Verschiebemittel zum Verschieben der Küchenmaschine mehrere in Größe und/oder Position verstellbare und voneinander beabstandete Fußeinheiten aufweisen, wobei das Verstellmittel ein Zahnrad für jede Fußeinheit zum Verstellen der Fußeinheiten, einen mit den Zahnrädern in Eingriff stehenden Zahnkranz (der vorzugsweise gleichzeitig im Eingriff mit allen Zahnrädern der Verstellmittel steht und ggf. eine Schrägverzahnung aufweist) sowie ein Antriebsritzel zum Antreiben des Zahnkranzes aufweist. Durch den vorzugsweise ringförmigen (mit Innen und/oder Außenverzahnung) Zahnkranz und die Zahnräder kann das Verstellmittel das Verschiebemittel (mit allen Fußeinheiten insbesondere gleichzeitig) einfach und zuverlässig in die gewünschte Position verstellen. Anstelle des erwähnten Zahnkranzes kann auch ein (offener (mit 2 Enden) oder geschlossener (ohne ein Ende)) Zahnriemen verwendet werden. Zum Aktivieren und/oder Ansteuern des Verstellmittels kann beispielsweise nur ein einziger Elektromotor zum Bewegen und/oder Drehen des Zahnkranzes bereitgestellt sein. Der Elektromotor kann als Bestandteil des Verstellmittels betrachtet werden. Der Elektromotor kann ferner als Antriebsmotor zum Antreiben des Verstellmittels und/oder zum Verstellen des Verschiebemittels verstanden werden. Die Zahnräder und der Zahnkranz können jeweils ineinandergreifende Trapezgewinde aufweisen. Die Fußeinheit kann jeweils als Gewindestempel und/oder stempelförmige Fußeinheit verstanden werden. Das Zahnrad kann form- und/oder kraftschlüssig mit der Fußeinheit mechanisch verbunden sein und zum Verstellen des Verschiebemittels mit dem Zahnkranz in Eingriff und/oder in Wirkverbindung stehen, in dem vorzugsweise das vom Zahnrad erzeugte Drehmoment auf die Fußeinheit, insbesondere den Linearantrieb, übertragbar ist. Auch ist es denkbar, dass für jede Fußeinheit ein eigener Elektromotor zum Einsatz kommt, wodurch eine individuelle Ansteuerung der einzelnen Fußeinheit möglich ist.

Gemäß einer weiteren Ausgestaltungsvariante der vorliegenden Erfindung ist es möglich, dass das Verstellmittel eine Hebelmechanik zum Verstellen des Verschiebemittels aufweist. Mit einer solchen Hebelmechanik ist es möglich, das Verstellmittel manuell (durch den Benutzer) und damit entsprechend einfach zu bedienen. Auf elektromotorische Antriebseinheiten kann verzichtet werden. So ist es beispielsweise möglich, auch ohne bestehende Stromzufuhr das Verstellmittel zu betätigen bzw. das Verschiebemittel zum Verschieben der Küchenmaschine zwischen dem aktivierten Zustand und dem deaktivierten Zustand zu verstellen. Gleichwohl ist es möglich, dass die Hebelmechanik als Teil einer Motor- und/oder Steuereinheit der Küchenmaschine und insbesondere des Basisgerätes ausgestaltet ist und entsprechend elektrisch oder elektromotorisch antreibbar konfiguriert ist. Für eine möglichst leichtgängige Bedienung der Hebelmechanik und/oder ein entsprechend leichtgängiges Verschieben der Küchenmaschine ist es möglich, dass die Hebelmechanik eine Vorspanneinheit zum vorgespannten Lagern wenigstens eines Hebels der Hebeleinheit aufweist. Damit kann die für den Nutzer der Küchenmaschine bzw. der Hebeleinheit erforderliche Kraft reduziert werden.

Gemäß einer weiteren Ausgestaltungsvariante der vorliegenden Erfindung weist ein Basisgerät zumindest ein (vorzugsweise genau ein "1") manuell (durch einen Benutzer) betätigbares Betätigungsmittel zum Betätigen des Verstellmittels für das Verstellen des Verschiebemittels zwischen dem deaktivierten Zustand und dem aktivierten Zustand auf, wobei das Betätigungsmittel am und/oder im Gehäuse ausgestaltet ist. Das manuell betätigbare Betätigungsmittel kann insbesondere einen Hebelmechanismus aufweisen, um das Verschiebemittel aus dem deaktivierten Zustand in den aktivierten Zustand und zurück zu verstellen. Idealerweise werden über das manuell betätigbare Betätigungsmittel sämtliche Fußeinheiten des Verschiebemittels (gleichzeitig) betätigt.

Das Betätigungsmittel ist bei einem erfindungsgemäßen Basisgerät vorzugsweise an einer Unterseite des Bodenbereichs ausgestaltet. Damit ist das Betätigungsmittel von Umwelteinflüssen von der Seite und/oder von oben geschützt. Weiterhin kann auf einfache Weise ein versehentliches Betätigen bzw. Aktivieren des Betätigungsmittels verhindert werden. Gleichwohl ist es möglich, dass das Basisgerät eine (elektrische) Bedieneinheit zum berührungsempfindlichen (oder kontaktfreien) Bedienen (bspw. durch einen kapazitiven Sensor und/oder Drucksensor und/oder Schaltelement und/oder optoelektronischer Sensor) des Basisgerätes aufweist, wobei die Bedieneinheit das Betätigungsmittel umfasst. Genauer gesagt kann die Bedieneinheit ein Bedienfeld zum (automatischen und/oder elektrischen) Betätigen des Verstellmittels (durch den Elektromotor) visualisieren. Wenn sich das Basisgerät für den Betrieb des Basisgerätes auf der Arbeitsfläche befindet, zeigt die Unterseite zur Arbeitsfläche bzw. ist der Arbeitsfläche zugewandt. Am Basisgerät und insbesondere am Gehäuse des Basisgerätes kann wenigstens eine Griffmulde ausgestaltet sein, in welcher das Betätigungsmittel positioniert ist. Die wenigstens eine Griffmulde ist bevorzugt an der Unterseite des Basisgerätes und/oder des Gehäuses ausgestaltet. Damit ist eine einfache Bedienung bzw. Aktivierung des Betätigungsmittels auch ohne Sichtkontakt zum Betätigungsmittel möglich.

Das Betätigungsmittel ist bei einem erfindungsgemäßen Basisgerät vorzugsweise als berührungssensitives Betätigungsmittel zum berührungssensitiven Ansteuern des Verstellmittels konfiguriert. Damit lässt sich das Betätigungsmittel auch ohne Sichtkontakt besonders einfach bedienen bzw. aktivieren. Das Suchen und/oder Erfühlen von hervorstehenden Schaltern ist nicht erforderlich. So ist eine besonders intuitive Bedienung möglich. Darüber hinaus ist das Betätigungsmittel damit besonders schmutzresistent. Dies führt wiederum zu einer entsprechend nutzerfreundlichen Betriebsweise.

Von weiterem Vorteil kann es sein, wenn ein Basisgerät der vorliegenden Erfindung ein Visualisierungsmittel zum Erzeugen eines für einen Nutzer des Basisgerätes visuell wahrnehmbaren Hinweises am Basisgerät und/oder auf der Arbeitsfläche zum Erkennen eines Unterschieds zwischen dem deaktivierten Zustand und dem aktivierten Zustand aufweist. Auch damit kann eine erhöhte Betriebssicherheit beim Verschieben des Basisgerätes bzw. beim Verwenden der Erfindung erreicht werden. Nachdem sowohl das Verschiebemittel als auch das Betätigungsmittel zum Aktivieren des Verschiebemittels möglichst unsichtbar für den Nutzer an einer Unterseite des Basisgerätes ausgestaltet sind, kann durch das Visualisierungsmittel ein klar erkennbarer Hinweis (z. B. durch die ausgesendete Farbe - a) rot ≅ deaktivierter Zustand und grün - aktivierter Zustand oder b) durchgehender oder blinkender (grüner) Punkt - aktivierter Zustand und kein Punkt ≅ deaktivierter Zustand) auf den aktivierten Zustand gegeben werden. Dem Nutzer ist in diesem Zeitpunkt klar, dass das Basisgerät nun vorsichtig in die gewünschte Position verschoben werden, oder das Verschiebemittel wieder in den deaktivierten Zustand zurück verstellt werden sollte, um unbeabsichtigten Schaden am Basisgerät und/oder an sich selbst zu vermeiden. Das Visualisierungsmittel kann eine Unterbodenbeleuchtung aufweisen, um den aktivierten Zustand mittels Lichts auf der Arbeitsfläche im Bodenbereich und/oder im Bereich der Unterseite zu kennzeichnen. Hierzu kann das Visualisierungsmittel wenigstens ein Leuchtmittel, insbesondere in Form wenigstens einer LED, aufweisen. Das Leuchtmittel ist vorzugsweise im Bodenbereich, insbesondere wenigstens teilweise an einer Außenseite, insbesondere an der Unterseite, im Bodenbereich des Gehäuses, ausgestaltet.

Gemäß einem weiteren Aspekt der vorliegenden Erfindung wird ein Verfahren zum Verwenden und/oder Bedienen eines wie vorstehend beschriebenen Basisgerätes zur Verfügung gestellt. Das Verfahren weist die folgenden Schritte auf:
- Erkennen eines Verstellwunsches eines Nutzers des Basisgerätes zum Verstellen des Verschiebemittels vom deaktivierten Zustand in den aktivierten Zustand,
- Erkennen eines Betriebszustandes des Basisgerätes, und
- Verstellen des Verschiebemittels in den aktivierten Zustand abhängig vom erkannten Betriebszustand des Basisgerätes.

Wie vorstehend beschrieben wird der Betriebszustand vorzugsweise durch das Kontrollmittel bestimmt bzw. ermittelt. Zum Bestimmen des Betriebszustandes kann das Kontrollmittel über wenigstens einen Temperatursensor des Basisgerätes eine Temperatur im und/oder am Basisgerät, über ein Waagemittel das aktuelle Gewicht des Basisgerätes und/oder eine aktuelle Last auf das Basisgerät, über wenigstens einen Drehzahlsensor des Basisgerätes eine Drehzahl einer Rühreinheit des Basisgerätes und/oder über eine Leistungsermittlungseinheit des Basisgerätes eine aktuelle Leistungsaufnahme des Basisgerätes erfassen und basierend darauf den Betriebszustand des Basisgerätes ermitteln oder bestimmen. Darunter kann, mit anderen Worten, eine Sicherheitsüberprüfung verstanden werden, sodass das Basisgerät nur in einem für das Basisgerät und/oder den Nutzer des Basisgerätes sicheren Betriebszustand verschoben werden kann.

Weitere, die Erfindung verbessernde Maßnahmen ergeben sich aus der nachfolgenden Beschreibung zu verschiedenen Ausführungsbeispielen der Erfindung, welche in den Figuren schematisch dargestellt sind. Sämtliche aus den Ansprüchen, der Beschreibung oder den Figuren hervorgehende Merkmale und/oder Vorteile, einschließlich konstruktiver Einzelheiten und räumlicher Anordnungen können sowohl für sich als auch in den verschiedenen Kombinationen erfindungswesentlich sein.

Es zeigen jeweils schematisch:
- Figur 1: eine Vorrichtung für die Installation in einer Küchenmaschine,
- Figur 2: eine Küchenmaschine mit einem Basisgerät und einer im Basisgerät installierten Vorrichtung,
- Figur 3: eine Seitenansicht auf einen Bodenbereich eines Basisgerätes gemäß einer ersten Ausführungsform mit einem Verschiebemittel in einem deaktivierten Zustand des Verschiebemittels,
- Figur 4: eine Seitenansicht auf den Bodenbereich des Basisgerätes gemäß der ersten Ausführungsform mit dem Verschiebemittel in einem aktivierten Zustand des Verschiebemittels,
- Figur 5: eine Seitenansicht auf einen Bodenbereich eines Basisgerätes gemäß einer zweiten Ausführungsform mit einem Verschiebemittel in einem deaktivierten Zustand des Verschiebemittels,
- Figur 6: eine Seitenansicht auf den Bodenbereich des Basisgerätes gemäß der zweiten Ausführungsform mit dem Verschiebemittel in einem aktivierten Zustand des Verschiebemittels, und
- Figur 7: ein Flussdiagramm zum Erläutern eines Verfahrens.

Elemente mit gleicher Funktion und Wirkungsweise sind in den Figuren jeweils mit den gleichen Bezugszeichen versehen.

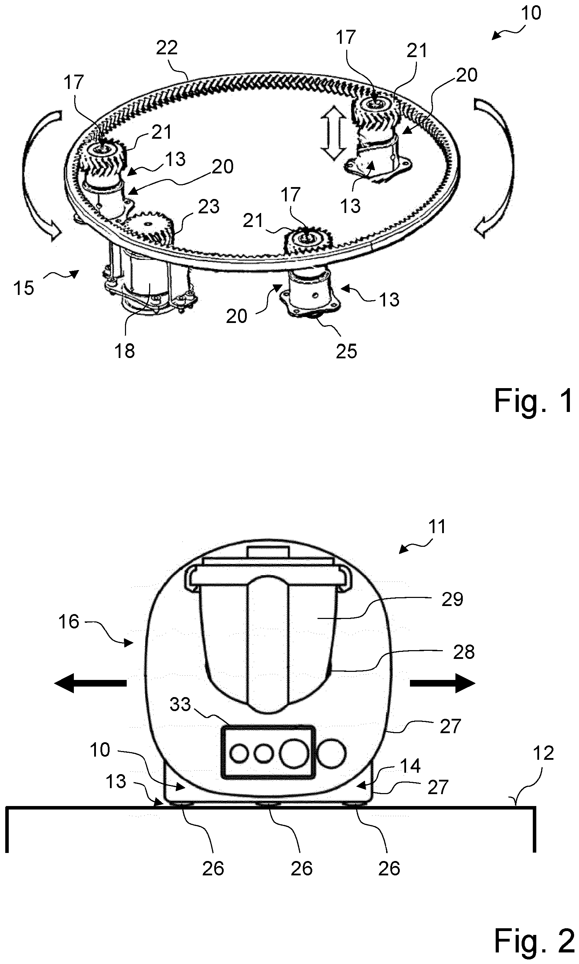

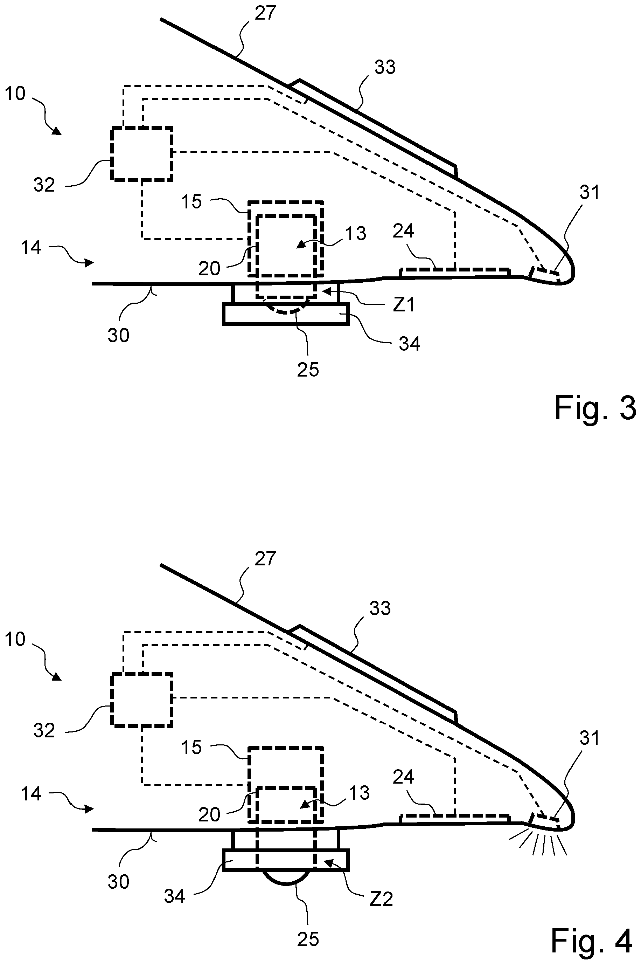

Fig. 1 zeigt eine Vorrichtung 10 zum verschiebbaren Positionieren einer in Fig. 2 gezeigten Küchenmaschine 11 auf einer Arbeitsfläche 12. Die Vorrichtung weist ein Verschiebemittel 13 zum Verschieben der Küchenmaschine 11 auf der Arbeitsfläche 12 auf, wobei das Verschiebemittel 13 für den Einbau in einen Bodenbereich 14 eines Basisgerätes 16 der Küchenmaschine 11 konfiguriert und ausgestaltet ist. Die Vorrichtung umfasst ferner ein Verstellmittel 15 zum Verstellen der Größe und insbesondere der Position des Verschiebemittels 13 zwischen einem deaktivierten Zustand Z1 des Verschiebemittels 13 zum Positionieren des Verschiebemittels 13 beabstandet von der Arbeitsfläche 12 in und/oder an der Küchenmaschine 11 und einem aktivierten Zustand Z2 des Verschiebemittels 13 zum Positionieren von wenigstens einem Teil des Verschiebemittels 13 auf der Arbeitsfläche 12 zum Verschieben der Küchenmaschine 11. Deaktivierte Zustände Z1 und aktivierte Zustände Z2 verschiedener Ausführungsformen sind in den Figuren 3 bis 6 gezeigt und werden später im Detail beschrieben.

Bei der in Fig. 1 gezeigten Vorrichtung 10 weist das Verschiebemittel 13 zum Verschieben der Küchenmaschine 11 mehrere in Größe und Position verstellbare sowie voneinander beabstandete, stempelförmige Fußeinheiten 20 auf. Das Verstellmittel 15 weist ein Zahnrad 21 für jede Fußeinheit 20 zum Verstellen der Fußeinheiten 20, einen mit den Zahnrädern 21 in Eingriff stehenden Zahnkranz 22 sowie ein Antriebsritzel 23 zum Antreiben des Zahnkranzes 22 auf. Zum Verstellen des Verschiebemittels 13 zwischen einem deaktivierten Zustand Z1 und einem aktivierten Zustand Z2 weist das Verstellmittel 15 mithin einen Zahnradmechanismus 21, 22 auf.

Das Verstellmittel 15 weist ferner einen Elektromotor 18 zum Verstellen des Verschiebemittels 13 durch Antreiben des Antriebsritzels 23 auf. Bei der in Fig. 1 dargestellten Vorrichtung 10 sind als Bestandteil des Verschiebemittels 13 an jeder Fußeinheit 20 eine Rolle 25 in Form einer Laufrolle zum rollenden Verschieben der Küchenmaschine 11 angeordnet. In die gezeigten Fußeinheiten 20 ist durch die Zahnräder 21 jeweils ein Linearantrieb 17 für eine translatorische Bewegung von wenigstens einem Teil des Verschiebemittels 13 zwischen dem deaktivierten Zustand Z1 und dem aktivierten Zustand Z2 installiert.

In Fig. 2 ist eine Küchenmaschine 11 mit einem Basisgerät 16 und einem im Basisgerät 16 positionierten Lebensmittelbehälter 29 dargestellt. Der Lebensmittelbehälter 29 ist in einer Behälteraufnahme 28 des Basisgerätes 16 positioniert. Die Behälteraufnahme 28 ist als Teil eines Gehäuses 27 des Basisgerätes 16 ausgestaltet. Das Basisgerät 16 weist ferner eine Bedieneinheit 33 zum Bedienen des Basisgerätes 16 sowie der Küchenmaschine 11 auf. Die Bedieneinheit 33 weist ein berührungsempfindliches Eingabe- und Anzeigedisplay auf. In einem Bodenbereich 14 des Gehäuses 27 bzw. des Basisgerätes 16 ist eine wie in Fig. 1 gezeigte dargestellte Vorrichtung 10 (nicht im Detail gezeigt) installiert. Die Vorrichtung 10 weist ein Verschiebemittel 13 auf, das anstelle der in Fig. 1 gezeigten Rollen 25 Gleitmittel 26 aufweist. Bei dem in Fig. 2 gezeigten Basisgerät 11 befindet sich das Verschiebemittel 13 in einem aktivierten Zustand Z2, in welchem die Gleitmittel 26 bzw. ein Teil des Verschiebemittels 13 die Arbeitsfläche 12 kontaktiert und das Gehäuse 27 von der Arbeitsfläche 12 beabstandet ist.

In den Figuren 3 und 4 ist jeweils eine Seitenansicht auf einen Bodenbereich 14 eines Basisgerätes 16 gemäß einer ersten Ausführungsform gezeigt. Bei dem in Fig. 3 gezeigten Basisgerät 16 befindet sich das Verschiebemittel 13 in einem deaktivierten Zustand Z2 innerhalb des Gehäuses 27, wobei ein Standfuß 34 bzw. Standfüße 34 vorliegend als Teil des Gehäuses 27 betrachtet werden kann bzw. können. Das gezeigte Basisgerät 16 umfasst ein Kontrollmittel 32 zum Erkennen eines Betriebszustandes des Basisgerätes 16 und zum Erlauben eines Verstellens des Verschiebemittels 13, anhand des erkannten Betriebszustandes, vom deaktivierten Zustand Z1 in den in Fig. 4 gezeigten aktivierten Zustand. Unter dem Kontrollmittel 32 kann eine zentrale Steuereinheit der Küchenmaschine 11 und/oder des Basisgerätes 16 verstanden werden. Das Kontrollmittel 32 steht mit der Bedieneinheit 33, dem Verstellmittel 15 sowie einem Betätigungsmittel 24 des Basisgerätes 16 in Signalverbindung. Das Betätigungsmittel 24 ist in einer Griffmulde als manuell betätigbares Betätigungsmittel 24 zum Betätigen des Verstellmittels 15 für das Verstellen des Verschiebemittels 13 zwischen dem deaktivierten Zustand Z1 und dem aktivierten Zustand Z2 ausgestaltet. Das in Fig. 3 gezeigte Betätigungsmittel 24 ist an einer Unterseite 30 des Bodenbereichs 14 des Gehäuses 27 ausgestaltet. Ferner ist das Betätigungsmittel 24 als berührungssensitives bzw. berührungsempfindliches Betätigungsmittel 24 zum berührungssensitiven Ansteuern des Verstellmittels 15 konfiguriert. Das in Fig. 3 gezeigte Basisgerät 16 umfasst außerdem ein Visualisierungsmittel 31 zum Erzeugen eines für einen Nutzer des Basisgerätes 16 visuell wahrnehmbaren Hinweises am Basisgerät 16 und insbesondere auf der Arbeitsfläche 12 unter dem Basisgerät 16 zum Erkennen eines Unterschieds zwischen dem deaktivierten Zustand Z1 und dem aktivierten Zustand Z2. Für die gewünschte Visualisierung weist das Visualisierungsmittel LED-Mittel auf. Sobald sich das Verschiebemittel 13 im aktivierten Zustand Z2 befindet, wird das Visualisierungsmittel 31 synchronisiert durch das Kontrollmittel 32 zum Beleuchten der Arbeitsfläche 12 unter der Unterseite 30 aktiviert. Dies ist in Fig. 4 gezeigt. Das Visualisierungsmittel 31 kann im gezeigten Beispiel somit als Unterbodenbeleuchtung des Basisgerätes 16 verstanden werden. Das Basisgerät 16 kann dahingehend konfiguriert sein, dass sich das Verschiebemittel 13 nur so lange im aktivierten Zustand Z2 befindet, so lange ein Nutzer das Betätigungsmittel 24 berührt. Sobald das Betätigungsmittel 24 nicht mehr berührt wird, verstellt das Verstellmittel 15 das Verschiebemittel 13 zurück in den deaktivierten Zustand Z2, in welchem die Rollen 25 wieder zurück in das Gehäuse 27 verschoben werden. Das durch das Visualisierungsmittel 31 emittierte Licht wird synchron dazu ausgeschaltet, insbesondere ausgefadet. Das Basisgerät 16 steht nun wieder fest auf der Arbeitsfläche 12.

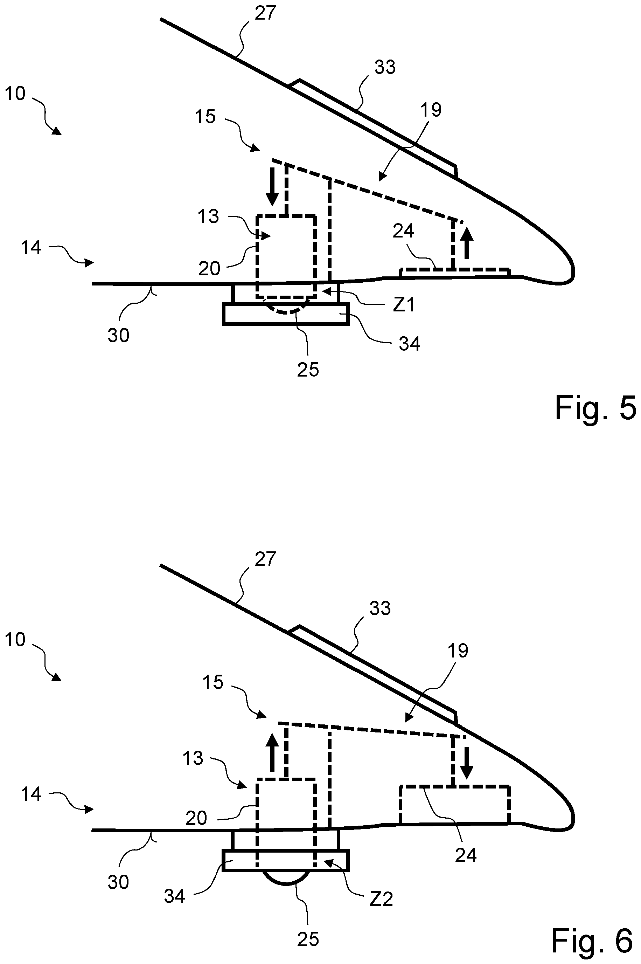

In den Figuren 5 und 6 ist jeweils eine Seitenansicht auf einen Bodenbereich 14 eines Basisgerätes 16 gemäß einer zweiten Ausführungsform gezeigt. Das Basisgerät 16 gemäß der zweiten Ausführungsform ist insbesondere durch eine Hebelmechanik 19 des Verstellmittels 15 zum Verstellen des Verschiebemittels 13 gekennzeichnet, welche an Stelle der elektromotorischen Antriebseinheit gemäß der ersten Ausführungsform installiert ist.

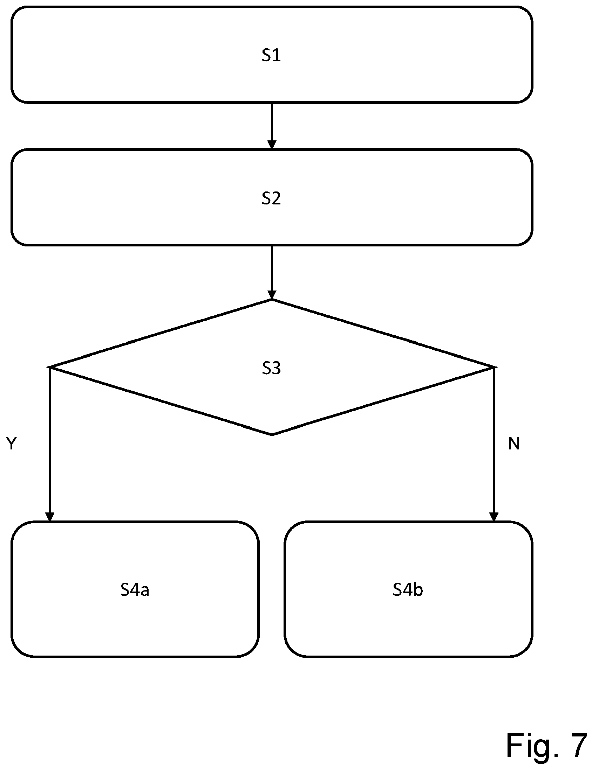

Mit Bezug auf Fig. 7 wird anschließend ein Verfahren zum sicheren Verwenden bzw. Bedienen eines wie vorstehend beschriebenen Basisgerätes erläutert. Im Rahmen des Verfahrens wird in einem ersten Schritt S1 zunächst ein Verstellwunsch eines Nutzers des Basisgerätes 16 zum Verstellen des Verschiebemittels 13 vom deaktivierten Zustand Z1 in den aktivierten Zustand Z2 erkannt. Dies kann durch Erkennen bzw. Ermitteln einer Druckausübung auf das Betätigungsmittel 24 und/oder eines Berührens des Betätigungsmittels 24 erkannt werden. In einem zweiten Schritt S2 wird, zumindest annähernd gleichzeitig, ein Betriebszustandes des Basisgerätes 16 erkannt und/oder ermittelt. Zum Erkennen und/oder Ermitteln des Betriebszustandes werden eine Temperatur im und/oder am Lebensmittelbehälter 29, eine Drehzahl eines Rührwerks (nicht dargestellt) des Basisgerätes 16 und/oder ein Gewicht von Lebensmitteln im Lebensmittelbehälter 29 ermittelt. In einem Schritt S3 wird nun bestimmt, ob der Betriebszustand mit Bezug auf den Verstellwunsch des Nutzers als kritischer bzw. "gefährlicher" Betriebszustand, also ein Betriebszustand, in welchem während des Verschiebens der Küchenmaschine 11 mit einer erhöhten Gefahr für den Nutzer gerechnet werden kann, eingestuft wird. Ist dies nicht der Fall (Y(es) - Fall), kann das Verschiebemittel gemäß Schritt S4a in den aktivierten Zustand verstellt werden. Befindet sich das Basisgerät 16 hingegen in einem kritischen bzw. für das Verschieben ungeeigneten Betriebszustand gemäß Schritt S4b (unzulässiger Fall / N(o) - Fall), wird das Verstellen des Verschiebemittels 13 in den aktivierten Zustand Z2 verhindert bzw. gar nicht erst zugelassen. Gleichzeitig wird über die Bedieneinheit 33 ein entsprechender Hinweis und/oder ein Warnhinweis an den Nutzer ausgegeben. Mit anderen Worten, aus Sicherheitsgründen steht die Funktionalität des Verstellens in den aktivierten Zustand dem Nutzer (genau) nur dann zur Verfügung, wenn sich das Basisgerät in einem vordefinierten sicheren Betriebszustand befindet.

Die Erfindung lässt neben den dargestellten Ausführungsformen weitere Gestaltungsgrundsätze zu, im Rahmen des Schutzbegehrens, welches in den Ansprüchen definiert ist. Das heißt, die Erfindung soll nicht auf die mit Bezug auf die Figuren erläuterten Ausführungsbeispiele beschränkt betrachtet werden. So kann das Gehäuse 27 ohne klassische Standfüße 34, sondern mit einer Standfläche ohne Vorsprünge von der Unterseite 30 ausgestaltet sein. Ferner kann die Hebelmechanik 19 eine Vorspanneinheit zum Vorspannen von wenigstens einem Hebel der Hebelmechanik 19 aufweisen, um dem Nutzer ein Verstellen des Verschiebemittels 13 in den aktivierten Zustand Z1 zu erleichtern.

### Bezugszeichenliste

- 10: Vorrichtung
- 11: Küchenmaschine
- 12: Arbeitsfläche
- 13: Verschiebemittel
- 14: Bodenbereich
- 15: Verstellmittel
- 16: Basisgerät
- 17: Linearantrieb
- 18: Elektromotor
- 19: Hebelmechanik
- 20: Fußeinheit
- 21: Zahnrad
- 22: Zahnkranz
- 23: Antriebsritzel
- 24: Betätigungsmittel
- 25: Rolle
- 26: Gleitmittel
- 27: Gehäuse
- 28: Behälteraufnahme
- 29: Lebensmittelbehälter
- 30: Unterseite
- 31: Visualisierungsmittel
- 32: Kontrollmittel
- 33: Bedieneinheit
- 34: Standfuß

- Z1: deaktivierter Zustand
- Z2: aktivierter Zustand
- S1: Schritt: Erkenne Verstellwunsch eines Nutzers
- S2: Schritt: Erkenne Betriebszustand des Basisgerätes
- S3: Schritt: Kritischer Betriebszustand?
- S4a: Schritt Y(es): Verschiebemittel in aktivierten Zustand
- S4b: Schritt N(o): Verschiebemittel in deaktivierten Zustand (und verhindere Verstellen und gebe Warnhinweis an Nutzer aus)

## Patentansprüche

1. Basisgerät (16) für eine Küchenmaschine (11) mit einer Vorrichtung (10) zum verschiebbaren Positionieren der Küchenmaschine (11) auf einer Arbeitsfläche (12), aufweisend ein Gehäuse (27) mit einer Behälteraufnahme (28) zum Aufnehmen eines Lebensmittelbehälters (29), einen Bodenbereich (14), der wenigstens teilweise unterhalb der Behälteraufnahme (28) ausgestaltet ist, wobei die Vorrichtung (10) wenigstens teilweise im Bodenbereich (14) ausgestaltet ist und ein Verschiebemittel (13) zum Verschieben der Küchenmaschine (11) auf der Arbeitsfläche (12) aufweist, wobei das Verschiebemittel (13) für den Einbau im Bodenbereich (14) ausgestaltet ist, wobei die Vorrichtung ein Verstellmittel (15) zum Verstellen des Verschiebemittels (13) zwischen
- einem deaktivierten Zustand (Z1) des Verschiebemittels (13) zum Positionieren des Verschiebemittels (13) beabstandet von der Arbeitsfläche (12) und
- einem aktivierten Zustand (Z2) des Verschiebemittels (13) zum Positionieren von wenigstens einem Teil des Verschiebemittels (13) auf der Arbeitsfläche (12) zum Verschieben der Küchenmaschine (11), aufweist,
**dadurch gekennzeichnet, dass** das Basisgerät
ein Kontrollmittel (32) zum Erkennen eines Betriebszustandes des Basisgerätes (16) und zum Erlauben eines Verstellens des Verschiebemittels (13) vom deaktivierten Zustand in den aktivierten Zustand anhand des erkannten Betriebszustandes aufweist.

2. Basisgerät (16) nach Anspruch 1,
**dadurch gekennzeichnet,**
**dass** das Verschiebemittel (13) wenigstens eine Rolle (25) zum rollenden Verschieben der Küchenmaschine (11) aufweist.

3. Basisgerät (16) nach einem der voranstehenden Ansprüche,
**dadurch gekennzeichnet,**
**dass** das Verschiebemittel (13) wenigstens ein Gleitmittel (26) zum gleitenden Verschieben der Küchenmaschine (11) aufweist.

4. Basisgerät (16) nach einem der voranstehenden Ansprüche,
**gekennzeichnet durch,**
einen Linearantrieb (17) für eine translatorische Bewegung von wenigstens einem Teil des Verschiebemittels (13) zwischen dem deaktivierten Zustand (Z1) und dem aktivierten Zustand (Z2).

5. Basisgerät (16) nach einem der voranstehenden Ansprüche,
**dadurch gekennzeichnet,**
**dass** das Verstellmittel (15) zum Verstellen des Verschiebemittels (13) zwischen dem deaktivierten Zustand (Z1) und dem aktivierten Zustand (Z2) einen Zahnradmechanismus (21, 22) aufweist.

6. Basisgerät (16) nach einem der voranstehenden Ansprüche,
**dadurch gekennzeichnet,**
**dass** das Verschiebemittel (13) zum Verschieben der Küchenmaschine (11) mehrere in Größe und/oder Position verstellbare und voneinander beabstandete Fußeinheiten (20) aufweist, und das Verstellmittel (15) ein Zahnrad (21) für jede Fußeinheit (20) zum Verstellen der Fußeinheiten (20), einen mit den Zahnrädern (21) in Eingriff stehenden Zahnkranz (22) sowie ein Antriebsritzel (23) zum Antreiben des Zahnkranzes (22) aufweist.

7. Basisgerät (16) nach einem der voranstehenden Ansprüche,
**dadurch gekennzeichnet,**
**dass** das Verstellmittel (15) einen Elektromotor (18) zum Verstellen des Verschiebemittels (13) aufweist.

8. Basisgerät (16) nach einem der voranstehenden Ansprüche,
**dadurch gekennzeichnet,**
**dass** das Verstellmittel (15) eine Hebelmechanik (19) zum Verstellen des Verschiebemittels (13) aufweist.

9. Basisgerät (16) nach einem der voranstehenden Ansprüche,
**gekennzeichnet durch,**
ein manuell betätigbares Betätigungsmittel (24) zum Betätigen des Verstellmittels (15) für das Verstellen des Verschiebemittels (13) zwischen dem deaktivierten Zustand (Z1) und dem aktivierten Zustand (Z2), wobei das Betätigungsmittel (24) am und/oder im Gehäuse (27) ausgestaltet ist.

10. Basisgerät (16) nach einem der voranstehenden Ansprüche,
**dadurch gekennzeichnet,**
**dass** das Betätigungsmittel (24) an einer Unterseite (30) des Bodenbereichs (14) ausgestaltet ist.

11. Basisgerät (16) nach Anspruch 10,
**dadurch gekennzeichnet,**
**dass** das Betätigungsmittel (24) als berührungssensitives Betätigungsmittel (24) zum berührungssensitiven Ansteuern des Verstellmittels (15) konfiguriert ist.

12. Basisgerät (16) nach einem der Ansprüche 9 bis 11,
**gekennzeichnet durch**
ein Visualisierungsmittel (31) zum Erzeugen eines für einen Nutzer des Basisgerätes (16) visuell wahrnehmbaren Hinweises am Basisgerät (16) und/oder auf der Arbeitsfläche (12) zum Erkennen eines Unterschieds zwischen dem deaktivierten Zustand (Z1) und dem aktivierten Zustand (Z2).

13. Verfahren zum Verwenden eines Basisgerätes (16) nach einem der voranstehenden Ansprüche, aufweisend die Schritte:
- Erkennen eines Verstellwunsches eines Nutzers des Basisgerätes (16) zum Verstellen des Verschiebemittels (13) vom deaktivierten Zustand (Z1) in den aktivierten Zustand (Z2),
- Erkennen eines Betriebszustandes des Basisgerätes (16), und
- Verstellen des Verschiebemittels (13) in den aktivierten Zustand (Z2) abhängig vom erkannten Betriebszustand des Basisgerätes (16).

## Claims

1. A base unit (16) for a food processor (11) having a device (10) for slidably positioning the food processor (11) on a work surface (12), comprising a housing (27) having a container receptacle (28) for receiving a food container (29), a bottom area (14) at least partially below the container receptacle (28), the device (10) being at least partially formed in the bottom area (14) and comprising a displacement means (13) for displacing the food processor (11) on the work surface (12), the displacement means (13) being designed for installation in the bottom area (14), wherein the device comprises an adjustment means (15) for adjusting the displacement means (13) between the following positions
- a deactivated state (Z1) of the displacement means (13) for positioning the displacement means (13) spaced from the work surface (12) and
- an activated state (Z2) of the displacement means (13) for positioning at least a part of the displacement means (13) on the work surface (12) for displacing the food processor (11),
**characterized in that**
the base unit comprises a control means (32) for detecting an operating state of the base unit (16) and for allowing the displacement means (13) to be displaced from the deactivated state to the activated state on the basis of the detected operating state.

2. Base unit (16) according to claim 1,
**characterized in that**
the displacement means (13) has at least one roller (25) for rolling displacement of the food processor (11).

3. Base unit (16) according to any one of the preceding claims,
**characterized in that**
the displacement means (13) has at least one sliding means (26) for sliding the food processor (11).

4. Base unit (16) according to any one of the preceding claims,
**characterized by**
a linear drive (17) for a translatory movement of at least a part of the displacement means (13) between the deactivated state (Z1) and the activated state (Z2).

5. Base unit (16) according to any one of the preceding claims,
**characterized in that**
the adjustment means (15) for adjusting the displacement means (13) between the deactivated state (Z1) and the activated state (Z2) has a gear mechanism (21, 22).

6. Base unit (16) according to any one of the preceding claims,
**characterized in that**
the displacement means (13) for displacing the food processor (11) comprises a plurality of foot units (20) adjustable in size and/or position and spaced apart from each other, and the adjustment means (15) comprises a gear wheel (21) for each foot unit (20) for adjusting the foot units (20), a gear rim (22) meshing with the gear wheels (21), and a drive pinion (23) for driving the gear rim (22).

7. Base unit (16) according to any one of the preceding claims,
**characterized in that**
the adjustment means (15) has an electric motor (18) for adjusting the displacement means (13).

8. Base unit (16) according to any one of the preceding claims,
**characterized in that**
the adjustment means (15) has a lever mechanism (19) for adjusting the displacement means (13).

9. Base unit (16) according to any one of the preceding claims,
**characterized by**
a manually operable actuating means (24) for actuating the adjustment means (15) for displacing the displacement means (13) between the deactivated state (Z1) and the activated state (Z2), wherein the actuating means (24) is formed on and/or in the housing (27).

10. Base unit (16) according to any one of the preceding claims,
**characterized in that**
the actuating means (24) is configured on an underside (30) of the bottom area (14).

11. Base unit (16) according to claim 10,
**characterized in that**
the actuating means (24) is configured as a touch-sensitive actuating means (24) for touch-sensitive actuation of the adjustment means (15).

12. Base unit (16) according to any one of claims 9 to 11,
**characterized by**
a visualization means (31) for generating an indication on the base unit (16) and/or on the work surface (12) that can be visually perceived by a user of the base unit (16) for detecting a difference between the deactivated state (Z1) and the activated state (Z2).

13. A method of using a base unit (16) according to any one of the preceding claims, comprising the steps of:
- Detection of an adjustment request by a user of the base unit (16) for adjusting the displacement means (13) from the deactivated state (Z1) to the activated state (Z2),
- Detecting an operating state of the base unit (16), and
- Moving the displacement means (13) to the activated state (Z2) depending on the detected operating state of the base unit (16).

## Revendications

1. Appareil de base (16) pour un robot ménager (11) avec un dispositif (10) pour positionner de manière coulissante le robot ménager (11) sur une surface de travail (12), présentant un boîtier (27) avec un logement de récipient (28) pour recevoir un récipient d'aliments (29), une zone de fond (14), qui est configurée au moins partiellement en dessous du logement de récipient (28), le dispositif (10) étant configuré au moins partiellement dans la zone de fond (14) et comprenant un moyen de déplacement (13) pour déplacer le robot ménager (11) sur la surface de travail (12), le moyen de déplacement (13) étant configuré pour être installé dans la zone de fond (14), dans lequel le dispositif comprend un moyen de réglage (15) pour déplacer le moyen de déplacement (13) entre
- un état désactivé (Z1) du moyen de déplacement (13) pour positionner le moyen de déplacement (13) à distance de la surface de travail (12) et
- un état activé (Z2) du moyen de déplacement (13) pour positionner au moins une partie du moyen de déplacement (13) sur la surface de travail (12) pour déplacer le robot ménager (11),
**caractérisé en ce que**
l'appareil de base présente un moyen de contrôle (32) pour reconnaître un état de fonctionnement de l'appareil de base (16) et pour permettre un déplacement du moyen de déplacement (13) de l'état désactivé à l'état activé sur la base de l'état de fonctionnement reconnu.

2. Appareil de base (16) selon la revendication 1,
**caractérisé en ce que**
le moyen de déplacement (13) présente au moins un rouleau (25) pour le déplacement roulant du robot ménager (11).

3. Appareil de base (16) selon l'une des revendications précédentes,
**caractérisé en ce que**
le moyen de déplacement (13) présente au moins un moyen de glissement (26) pour le déplacement glissant du robot ménager (11).

4. Appareil de base (16) selon l'une des revendications précédentes,
**caractérisé par**
un entraînement linéaire (17) pour un mouvement de translation d'au moins une partie du moyen de déplacement (13) entre l'état désactivé (Z1) et l'état activé (Z2).

5. Appareil de base (16) selon l'une des revendications précédentes,
**caractérisé en ce que**
le moyen de réglage (15) pour le réglage du moyen de déplacement (13) entre l'état désactivé (Z1) et l'état activé (Z2) présente un mécanisme à roues dentées (21, 22).

6. Appareil de base (16) selon l'une des revendications précédentes,
**caractérisé en ce que**
le moyen de déplacement (13) pour déplacer le robot ménager (11) présente plusieurs unités de pied (20) réglables en taille et/ou en position et espacées les unes des autres, et que le moyen de réglage (15) présente une roue dentée (21) pour chaque unité de pied (20) pour régler les unités de pied (20), une couronne dentée (22) en prise avec les roues dentées (21) ainsi qu'un pignon d'entraînement (23) pour entraîner la couronne dentée (22).

7. Appareil de base (16) selon l'une des revendications précédentes,
**caractérisé en ce que**
le moyen de réglage (15) présente un moteur électrique (18) pour le réglage du moyen de déplacement (13).

8. Appareil de base (16) selon l'une des revendications précédentes,
**caractérisé en ce que**
le moyen de réglage (15) présente un mécanisme à levier (19) pour le réglage du moyen de déplacement (13).

9. Appareil de base (16) selon l'une des revendications précédentes,
**caractérisé par**
un moyen d'actionnement (24) pouvant être actionné manuellement pour actionner le moyen de réglage (15) pour le réglage du moyen de déplacement (13) entre l'état désactivé (Z1) et l'état activé (Z2), le moyen d'actionnement (24) étant configuré sur et/ou dans le boîtier (27).

10. Appareil de base (16) selon l'une des revendications précédentes,
**caractérisé en ce que**
le moyen d'actionnement (24) est configuré sur une face inférieure (30) de la zone de fond (14).

11. Appareil de base (16) selon la revendication 10,
**caractérisé en ce que**
le moyen d'actionnement (24) est configuré comme moyen d'actionnement (24) sensible au toucher pour la commande sensible au toucher du moyen de réglage (15).

12. Appareil de base (16) selon l'une quelconque des revendications 9 à 11,
**caractérisé par**
un moyen de visualisation (31) pour générer sur l'appareil de base (16) et/ou sur la surface de travail (12) une indication pouvant être perçue visuellement par un utilisateur de l'appareil de base (16) pour détecter une différence entre l'état désactivé (Z1) et l'état activé (Z2).

13. Procédé d'utilisation d'un appareil de base (16) selon l'une quelconque des revendications précédentes, comprenant les étapes consistant à :
- La détection d'une demande de déplacement d'un utilisateur de l'appareil de base (16) pour déplacer le moyen de déplacement (13) de l'état désactivé (Z1) à l'état activé (Z2),
- La détection d'un état de fonctionnement de l'appareil de base (16), et
- Le déplacement du moyen de déplacement (13) dans l'état activé (Z2) en fonction de l'état de fonctionnement détecté de l'appareil de base (16).
